# EUROPÄISCHE PATENTSCHRIFT

(11) **EP 1 655 574 B1**
(45) Veröffentlichungstag und Bekanntmachung des Hinweises auf die Patenterteilung: **30.11.2011**
(21) Anmeldenummer: 05109880.4
(22) Anmeldetag: 24.10.2005
(51) Int. Cl.: G01C 15/00

(54) **Baulaser mit neigbarem Umlenkmittel**
Construction laser with inclinable turning means
Laser de construction muni d'un prisme inclinable

(30) Priorität: 04.11.2004 DE 102004053249
(43) Veröffentlichungstag der Anmeldung: 10.05.2006
(73) Patentinhaber: HILTI Aktiengesellschaft, 9494 Schaan (LI)
(72) Erfinder: Würsch, Christoph, 9470, Werdenberg (CH); Waibel, Reinhard, 9442, Berneck (CH)
(74) Vertreter: Wildi, Roland

(56) Entgegenhaltungen:
- EP-A- 0 854 351
- US-A1- 2003 101 605

## Beschreibung

Die Erfindung betrifft einen Baulaser mit einem gegenüber dem Gehäuse neigbaren Umlenkmittel für einen Laserstrahl, insbesondere einen nach dem Gravitationsfeld selbstnivellierenden Rotationsbaulaser mit einem rotierenden Laserstrahl. Die erfindungsgemässe Realisierung ist zudem auch für Kanalbaulaser oder andere Servobetriebene Baulaser (Punkt / Linie) anwendbar.

Rotationsbaulaser mit einem zumindest segmentweise rotierenden Laserstrahl werden vor allem im Baugewerbe eingesetzt, um auf Wänden, Decken und Böden horizontale, vertikale oder definiert geneigte Ebenen festzulegen.

Übliche Rotationslaser bestehen aus einer in zwei Achsen verkippbaren Plattform, auf der sich die Lagesensorik als auch der Rotationskopf befindet. Der Rotationskopf ist relativ zu dieser Sensorik auf einige Winkelsekunden genau justiert. Mit Hilfe von Stellantrieben wie Schrittmotoren, die am äusseren Gehäuse fixiert sind, kann diese Plattform in zwei Richtungen um einige Winkelgrade relativ zum Gehäuse verkippt werden. Als Lagesensoren kommen Libellen zum Einsatz, die optisch entweder mittels CCD-Zeilen oder mit Photodioden ausgelesen werden. Eine Regelung liest diese Sensoren für die x- und y-Richtung aus und verfährt die Schrittmotoren in die entsprechende Richtung solange, bis sich die Luftblase der Libelle in der geeichten Mittenposition befindet. Die Schrittmotoren sind meist mit vorgespannten Schneckengetrieben untersetzt, um die notwendige Winkelgenauigkeit zu erhalten. Nachteile dieser Konstruktion sind die Baugrösse, das Gewicht der Schrittmotoren und die Kosten des Aufbaus. Ausserdem können sich die Schneckengetriebe an beiden Endanschlägen verklemmen. Die Tatsache, dass der Antrieb sehr stark untersetzt ist, kann dazu führen, dass es an den mechanischen Endanschlägen zu einer mechanischen Selbsthemmung kommt. Der Schrittmotor fährt an diesen Endanschlag, die Schnecke wird gehemmt. Das Motormoment reicht dann nicht aus, das Getriebe aus dieser Selbsthemmung zu befreien.

Nach der DE4406914 weist ein selbstnivellierender Rotationsbaulaser eine in einem Montagerahmen angeordnete Lasereinheit auf, deren Laserstrahl etwa um 90° von einem Umlenkmittel umlenkbar ist, das in einem Rotationsteil um eine Drehachse drehbar gelagert ist.

Nach der EP854351 ist die Rotationsebene des Laserstrahls in zwei zueinander senkrechten Schwenkebenen neigbar, indem die in einer Kugelkalottenlagerung neigbar im Montagerahmen gelagerte Drehachse mitsamt der Lasereinheit und der Umlenkmittel über zwei Stellantriebe gegenüber dem zumeist horizontal ausgerichteten Gehäuse geneigt wird. Die verwendeten Stellantriebe mit Schrittmotoren und selbsthemmender Gewindespindel sind konstruktiv komplex aufgebaut und störanfällig.

Nach der DD291141 weist ein elektrooptisches Nivellierinstrument ein in einem drehbaren Unterteil neigbar gelagertes Nivellierfernrohr auf, wobei die Neigung des Nivellierfernrohres bezüglich des Unterteils durch einen Piezoaktor erfolgt, der mit einer Steuerelektronik steuerbar verbunden ist.

Nach der US2003101605 weist ein Baulaser in einem Gehäuse eine Lasereinheit auf, deren Laserstrahl von einem Umlenkmittel umgelenkt ist, das gemeinsam mit der Lasereinheit in einem Neigungsteil angeordnet ist, welches zum Gehäuse über einen Stellantrieb verstellbar ist, der einen Aktuator aufweist, der mit einer Steuerelektronik steuerbar verbunden ist.

Zudem werden Piezoaktoren vielfältig verwendet, nach der DE3412014C1, DE19817802A1, EP1142039B1 als Stellantrieb bspw. für Hexapode nach DE19742205A1, nach der EP360975A2, EP0799502B1 als Reibkraftantrieb bei Trägheitsgleitern oder nach der US4987334 als Drehschwingantrieb eines Lasergyroskops. Nach dem Fachartikel von James Fried et al.; IEEE/ASME Transactions on Mechatronics; Vol. 9; No. 3; Sept. 2004 sind mit einer einzigen geometrisch komplexen Piezoaktorstruktur zudem an versetzten Raumbereichen verschiedene Schwingungsmuster abhängig von der Steuerfrequenz erzeugbar.

Die Aufgabe der Erfindung besteht in der Realisierung eines Baulasers mit einem konstruktiv einfachen Stellantrieb für die zum Gehäuse neigbaren Umlenkmittel. Ein weiterer Aspekt besteht in der Verkleinerung des Gehäuses.

Die Aufgabe wird im Wesentlichen durch die Merkmale des unabhängigen Anspruchs gelöst. Vorteilhafte Weiterbildungen ergeben sich aus den abhängigen Ansprüchen.

So weist ein Baulaser in einem Gehäuse eine Lasereinheit auf, deren Laserstrahl von einem Umlenkmittel umgelenkt ist, das gemeinsam mit der Lasereinheit in einem Neigungsteil angeordnet ist, welches zum Gehäuse über einen Stellantrieb verstellbar ist. Der weist dabei zumindest einen Piezoaktor auf, der mit einer Steuerelektronik steuerbar verbunden ist.

Durch die Verwendung von Piezoaktoren als Stellantrieb kann auf eine komplizierte Untersetzung und auf den Schrittmotor verzichtet werden. Dadurch entfällt zudem deren Raumbedarf im Gehäuse.

Erfindungsgemäß ist in dem Neigungsteil das Umlenkmittel um eine Drehachse drehbar gelagert, wodurch der Baulaser einen Rotationsbaulaser mit einem zumindest segmentweise rotierenden Laserstrahl ausbildet.

Vorteilhaft ist das Gehäuse über eine flexible elastische Membran, weiter vorteilhaft gefaltet, zu dem Neigungsteil hin abgedichtet, wodurch das Innere des Gehäuses mit den Piezoaktoren vor Verunreinigungen geschützt ist.

Vorteilhaft ist an dem Neigungsteil zumindest ein bezüglich des Gravitationsfeldes sensibler Neigungssensor angeordnet, der mit der Steuerelektronik erfassbar verbunden ist, wodurch über eine Regelschleife der Steuerelektronik ein selbstnivellierender Baulaser realisierbar ist.

Vorteilhaft weist das Neigungsteil eine sphärische Gleitfläche auf, die im Reibkontakt direkt auf den zumindest drei, im Gehäuse flächig verteilt angeordneten, Piezoaktoren gelagert ist und die gegen diese mit einem Vorspannmittel druckvorgespannt ist. Hierdurch wird ein Trägheitsgleiter ausbildet, wobei sich das Neigungsteil durch Anlegen einer Sägezahnspannung an die einzelnen Piezoaktoren vermittelt über deren Scherdeformation und die Massenträgheit des Neigungsteils in allen Richtungen der Kugeloberfläche steuerbar bewegen lässt, insbesondere in allen drei EULERschen Winkeln Θ, Φ und Ψ. Die mehreren Piezoaktoren können dabei wirkungsgleich selbst auch als flächig verteilte Raumbereiche einer einzelnen, geometrisch komplexen Piezoaktorstruktur ausgebildet sein, die abhängig von der Steuerfrequenz unterschiedliche Schwingungsmuster erzeugen.

Alternativ weist das Gehäuse eine inverse sphärische Gleitfläche auf, auf der im Reibkontakt direkt zumindest drei, im Neigungsteil flächig verteilt angeordnete, Piezoaktoren gelagert sind. Die sphärische Gleitfläche ist gegen diese Piezoaktoren mit einem Vorspannmittel druckvorgespannt, wodurch die Steuerelektronik im Neigungsteil angeordnet werden kann.

Ein Trägheitsgleiter ist ein vorbekanntes Prinzip, das oft dann zur Anwendung kommt, wenn über längere Distanzen hochgenau, jedoch relativ positioniert werden soll. Relativ heisst hier, dass sich dieses Prinzip nicht besonders eignet als absolute Positioniermethode, sondern immer in Verbindung mit einem Sensor in einem Regelkreis verwendet wird. Die inkrementelle Schrittweite dieses Prinzips ist sehr klein, sodass zusammen mit einem hochgenauen absoluten Positions- oder Winkelsensor sehr genaue Positionierungen möglich sind. Durch die mechanische Massenträgheit der sphärischen Gleitfläche und der darauf befindlichen Bauteile, vermag die sphärische Gleitfläche nur den langsamen Bewegungen der Piezoaktors zu folgen, d.h. nur der steigenden Flanke der Sägezahnspannung. Bei der steilen, absteigenden Flanke der anliegenden Sägezahnspannung verformen sich die Piezoelemente augenblicklich zurück. Die Massenträgheit ist bei diesen Beschleunigungen der Piezoaktoren so gross, dass die Reibung zwischen Piezoaktor und sphärischer Gleitfläche nicht ausreicht, um die auftretenden Kräfte auf die sphärische Gleitfläche zu übertragen. Der Piezoaktor verformt sich zurück, ohne dass sich die darauf befindliche sphärische Gleitfläche mitbewegt. Die Schrittweite im nm-Bereich ist dabei durch die Höhe der Sägezahnspannung, deren Frequenz, durch die Art der Piezoaktoren und die Rauheit der Oberfläche der sphärischen Gleitfläche gegeben.

Vorteilhaft sind genau vier Piezoaktoren vorhanden, die in zwei Piezoaktorpaare längs je einer Antriebsrichtung verteilt sind, wobei die beiden Antriebsrichtungen senkrecht zueinander stehen, wodurch sich durch Ansteuerung je eines Piezoaktorpaares eine separierbare Bewegung der sphärischen Gleitfläche realisieren lässt, insbesondere eine reine Neigung um bezüglich der lokalen kartesischen Gehäuseskoordinaten X und Y feste Neigungsachsen.

Vorteilhaft ist zumindest ein Piezoaktor über ein Druckfedermittel gelagert und durch dieses zum Kugelmittelpunkt druckvorgespannt, wodurch sich die Normalkraft gleichmässiger über mehrere Piezoaktoren verteilt.

Vorteilhaft ist das Umlenkmittel so positioniert, dass sich der Austritt des Laserstrahls nahe des Kugelmittelpunktes der sphärischen Gleitfläche befindet, wodurch gewährleistet wird, dass die Projektionsebene, die der Laserstrahl erzeugt, genau um diesen Punkt verkippt wird.

Vorteilhaft besteht das Vorspannmittel aus zumindest einem Permanentmagneten und seinem magnetisierbaren Gegenstück, welche jeweils im Gehäuse bzw. im Neigungsteil verteilt angeordnet sind, wodurch konstruktiv einfach eine die nötige Haftreibung bewirkende statische Normalkraft aufprägbar ist.

Vorteilhaft besteht die sphärische Gleitfläche aus einem magnetisierbaren Metall wie Eisen, wodurch es durch Tiefziehen und anschliessendem Überschleifen konstruktiv einfach herstellbar ist.

Vorteilhaft sind an der sphärischen Gleitfläche mehrere Endanschläge angeordnet, welche die möglichen Bewegungen bereichsweise begrenzen, wodurch sowohl übergrosse Neigungen als auch Mehrfachdrehungen der sphärischen Gleitfläche unterbunden werden können.

Alternativ vorteilhaft sind alle Piezoaktoren je über ein Druckfedermittel gelagert sowie die sphärische Gleitfläche kardanisch am Gehäuse aufgehängt, wodurch die Bewegung um den Drehwinkel Φ durch den Zwang der Kardanaufhängung unterbunden wird, d.h. insbesondere eine Eigenrotation der sphärischen Gleitfläche um die Drehachse.

Alternativ ist das kardanisch am Gehäuse gelagerte Neigungsteil über zumindest zwei winkelig versetzte Hebelmechanismen mit einem Hebelverhältnis grösser 10 : 1 mit zumindest je einem Piezoaktor neigbar verbunden, wodurch durch direkte Deformation der Piezoaktoren eine Neigung um eine beliebige Neigungsachse realisierbar ist.

Da ein Piezoaktor nur sehr geringe Stellwege aufweist, aber dafür sehr hohe Stellkräfte aufbauen kann, ist es für Positionierzwecke nützlich, die kurzen Stellwege über starre Hebelmechanismen mit grossem Hebelarm in längere Positionierwege umzuwandeln.

Vorteilhaft sind die zwei Hebelmechanismen zueinander senkrecht angeordnet, wodurch eine reine Neigung bezüglich der lokalen kartesischen Gehäusekoordinaten X und Y realisierbar ist.

Vorteilhaft bilden zwei parallel zueinander angeordnete Piezoaktoren ein Kippaktorpaar aus, wodurch bei entgegengesetzter Deformation je ein geringer linearer Stellweg in eine Winkelverkippung α umgewandelt wird, deren Kippbogen wesentlich länger ist.

Alternativ ist das Neigungsteil als Hexapode ausgebildet, das über zumindest sechs Piezoaktoren direkt am Gehäuse aufgehängt ist, wodurch direkt über die Ansteuerung der Piezoaktoren eine beliebige Neigung um einen virtuellen Drehpunkt einstellbar ist.

Die Erfindung wird bezüglich eines vorteilhaften Ausführungsbeispiels näher erläutert mit:
Fig. 1 als selbstnivellierender Rotationsbaulaser mit Permanentmagneten
Fig. 2 als Alternative mit Kardanaufhängung
Fig. 3 als Alternative mit Piezoaktor-Hebel
Fig. 4 als Alternative mit Piezoaktor-Hexapode

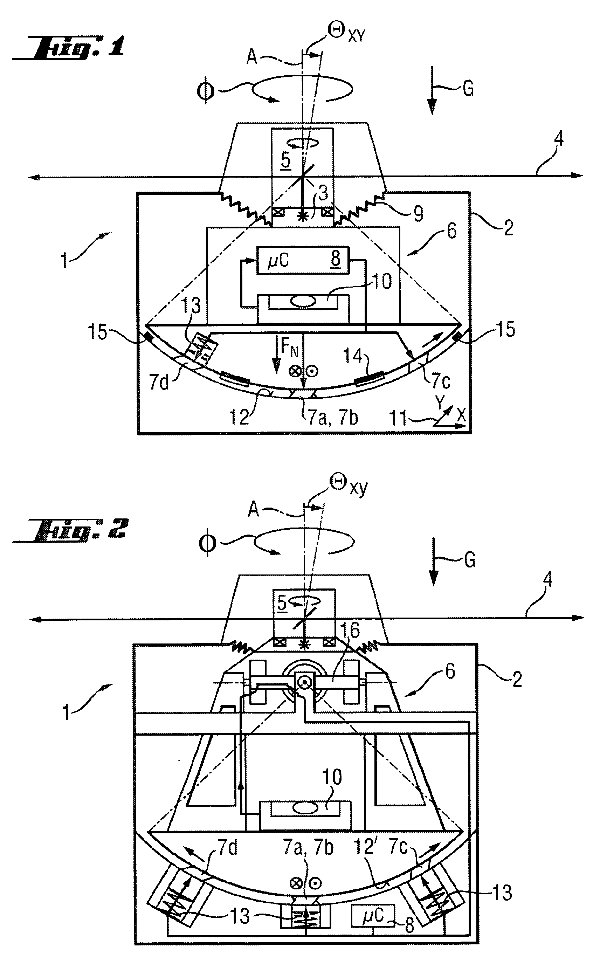

Nach Fig. 1 weist ein Baulaser 1 eine innerhalb eines teils transparenten Gehäuses 2 angeordnete Lasereinheit 3 auf, deren im Drehwinkel Φ rotierender Laserstrahl 4 von einem um die Drehachse A drehenden Umlenkmittel 5 umgelenkt ist, das gemeinsam mit der Lasereinheit 3 in einem Neigungsteil 6 angeordnet ist. Das Neigungsteil 6 ist zum Gehäuse 2 über einen Stellantrieb neigbar verstellbar, der vier flächig verteilte Piezoaktoren 7a - 7d aufweist, die mit einer Steuerelektronik 8 steuerbar verbunden sind. Das Gehäuse 2 ist über eine flexible elastische, faltenartig geformte Membran 9 zu dem Neigungsteil 6 hin abgedichtet. An dem Neigungssteil 6 ist ein bezüglich des Gravitationsfeldes G sensibler Neigungssensor 10 angeordnet, der mit der Steuerelektronik 8 erfassbar verbunden ist, welche über einen Regelalgorithmus die Piezoaktoren 7a, 7b, 7c, 7d solange zur Ausübung einer Bewegung ansteuert, bis die gewünschte Neigung Θ_{XY} zum Gravitationsfeld G bezüglich eines kartesischen Gehäusekoordinatensystems 11 mit den beiden Koordinatenachsen X, Y eingestellt ist. Das Gehäuse 2 weist eine inverse sphärische Gleitfläche 12 auf, auf denen das Neigungsteil 6 über die vier darin flächig verteilt angeordneten Piezoaktoren 7a, 7b, 7c, 7d direkt im Reibkontakt gelagert ist, wobei der vierte Piezoaktor 7d selbst über ein Druckfedermittel 13 im Neigungsteil 6 gelagert ist. Die zwei Piezoaktorpaare 7a+7b, 7c+7d sind längs je einer Antriebsrichtung längs der zueinander senkrecht stehenden Koordinatenachsen X, Y verteilt. Der Austritt des Laserstrahls 4 im Umlenkmittel 5 befindet sich exakt im Kugelmittelpunkt der inversen sphärischen Gleitfläche 12. Im Neigungsteil 6 sind Permanentmagneten 14 angeordnet, welche über die aus verchromten Eisenblech bestehende inverse sphärische Gleitfläche 12 als magnetisierbares Gegenstück den Reibkontakt der Piezoaktoren 7a, 7b, 7c, 7d mit der Normalkraft F_{N} druckvorspannen. An der sphärischen Gleitfläche 12 sind beidseitige Endanschläge 15 angeordnet.

Nach der Fig. 2 sind im Unterschied zur Fig. 1 alle vier Piezoaktoren 7a, 7b, 7c, 7d jeweils über ein Druckfedermittel 13 im Gehäuse 2 gelagert und mit der dort angeordneten Steuerelektronik 8 verbunden, wobei das Neigungsteil 6, welches die sphärische Gleitfläche 12' aus poliertem Aluminium ausbildet, in deren Kugelmittelpunkt selbst über eine Kardanaufhängung 16 kardanisch am Gehäuse 2 aufgehängt ist. Der Austritt des mit der Neigung Θ_{XY} im Drehwinkel Φ rotierenden Laserstrahls 4 im Umlenkmittel 5 befindet sich nahe des Kugelmittelpunktes der sphärischen Gleitfläche 12'.

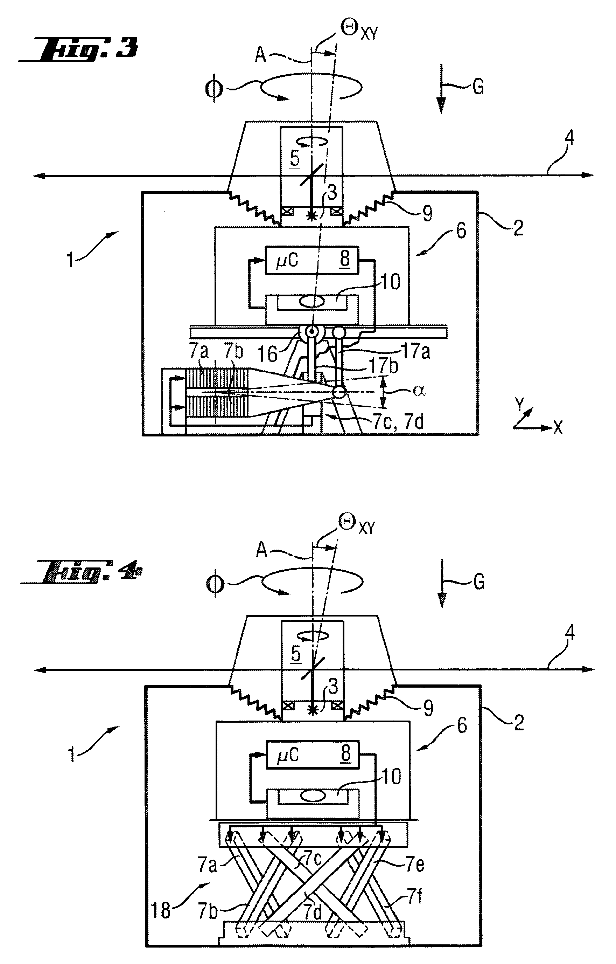

Nach den Fig. 3 und Fig. 4 weisen alternative Baulaser 1 eine innerhalb eines teils transparenten Gehäuses 2 angeordnete Lasereinheit 3 auf, deren im Drehwinkel Φ rotierender Laserstrahl 4 von einem um die Drehachse A drehenden Umlenkmittel 5 umgelenkt ist, das gemeinsam mit der Lasereinheit 3 in einem Neigungsteil 6 angeordnet ist. Das Neigungsteil 6 ist zum Gehäuse 2 über einen Stellantrieb neigbar verstellbar, der vier flächig verteilte Piezoaktoren 7a - 7d aufweist, die mit einer Steuerelektronik 8 steuerbar verbunden sind. Das Gehäuse 2 ist über eine flexible elastische, faltenartig geformte Membran 9 zu dem Neigungsteil 6 hin abgedichtet. An dem Neigungsteil 6 ist ein bezüglich des Gravitationsfeldes G sensibler Neigungssensor 10 angeordnet, der mit der Steuerelektronik 8 erfassbar verbunden ist, welche über einen Regelalgorithmus die Piezoaktoren 7a, 7b, 7c, 7d solange deformiert, bis die gewünschte Neigung Θ_{XY} zum Gravitationsfeld G bezüglich eines kartesischen Gehäusekoordinatensystems 11 mit den beiden Koordinatenachsen X, Y eingestellt ist.

Bei Fig. 3 ist das über eine Kardanaufhängung 16 kardanisch am Gehäuse 2 gelagerte Neigungsteil 6 über zwei zueinander senkrecht angeordnete Hebelmechanismen 17a, 17b mit einem Hebelverhältnis 20 : 1 mit je einem Kippaktorpaar aus je zwei parallel zueinander angeordneten Piezoaktoren 7a+7b, 7c+7d neigbar verbunden. Der Austritt des mit der Neigung Θ_{XY} im Drehwinkel Φ rotierenden Laserstrahls 4 im Umlenkmittel 5 befindet sich jedoch weit entfernt vom Drehpunkt der Kardanaufhängung 16.

Bei Fig. 4 ist das Neigungsteil 6 als Hexapode 18 ausgebildet, welches über seine sechs zueinander jeweils windschief versetzt angeordnete Piezoaktoren 7a, 7b, 7c, 7d, 7e, 7f direkt mit dem Gehäuse 2 verbunden ist. Der vom Regelalgorithmus der Steuerelektronik 8 bei der Ansteuerung der Piezoaktoren 7a, 7b, 7c, 7d, 7e, 7f berücksichtigte Drehpunkt befindet sich exakt im Austritt des mit der Neigung Θ_{XY} im Drehwinkel Φ rotierenden Laserstrahls 4 im Umlenkmittel 5.

## Patentansprüche

1. Baulaser mit einer Lasereinheit (3), deren Laserstrahl (4) von einem Umlenkmittel (5) umgelenkt ist, das gemeinsam mit der Lasereinheit (3) in einem Neigungsteil (6) angeordnet ist, welches zu einem Gehäuse (2) über einen Stellantrieb verstellbar ist, wobei der Stellantrieb zumindest einen Aktuator aufweist, der mit einer Steuerelektronik (8) steuerbar verbunden ist, **dadurch gekennzeichnet, dass** in dem Neigungsteil (6) das Umlenkmittel (5) um eine Drehachse (A) drehbar gelagert ist und dass der Aktuator ein Piezoaktor (7a) ist.

2. Baulaser nach Anspruch 1, **dadurch gekennzeichnet, dass** das Gehäuse (2) über eine, optional faltenartig geformte, flexible elastische Membran (9) zu dem Neigungsteil (6) hin abgedichtet ist.

3. Baulaser nach Anspruch 1 oder 2, **dadurch gekennzeichnet, dass** an dem Neigungsteil (6) zumindest ein bezüglich des Gravitationsfeldes (G) sensibler Neigungssensor (10) angeordnet ist, der mit der Steuerelektronik (8) erfassbar verbunden ist.

4. Baulaser nach einem der Ansprüche 1 bis 3, **dadurch gekennzeichnet, dass** das Neigungsteil (6) eine sphärische Gleitfläche (12) aufweist, die im Reibkontakt direkt auf den zumindest drei, im Gehäuse (2) flächig verteilt angeordnete, Piezoaktoren (7a, 7b, 7c) gelagert und gegen diese mit einem Vorspannmittel druckvorgespannt ist.

5. Baulaser nach einem der Ansprüche 1 bis 3, **dadurch gekennzeichnet, dass** das Gehäuse (2) eine inverse sphärische Gleitfläche (12') aufweist, auf der im Reibkontakt direkt zumindest drei, im Neigungsteil (6) flächig verteilt angeordnete, Piezoaktoren (7a, 7b, 7c) gelagert sind und die gegen diese mit einem Vorspannmittel druckvorgespannt ist.

6. Baulaser nach Anspruch 4 oder 5, **dadurch gekennzeichnet, dass** genau vier Piezoaktoren (7a, 7b, 7c, 7d) vorhanden sind, die als zwei Piezoaktorpaare (7a+7b, 7c+7d) je längs einer, zueinander senkrechten, Antriebsrichtung verteilt sind.

7. Baulaser nach einem der Ansprüche 4 bis 6, **dadurch gekennzeichnet, dass** zumindest ein Piezoaktor (7d) über ein Druckfedermittel (13) im Gehäuse (2) gelagert und durch dieses zum Kugelmittelpunkt hin druckvorgespannt ist.

8. Baulaser nach einem der Ansprüche 4 bis 7, **dadurch gekennzeichnet, dass** das Umlenkmittel (5) so positioniert ist, dass sich der Austritt des Laserstrahls (4) nahe des Kugelmittelpunktes der sphärischen Gleitfläche (12, 12') befindet.

9. Baulaser nach einem der Ansprüche 4 bis 8, **dadurch gekennzeichnet, dass** das Vorspannmittel aus zumindest einem Permanentmagneten (14) und seinem magnetisierbaren Gegenstück besteht, welche jeweils im Gehäuse (2) bzw. im Neigungsteil (6) verteilt angeordnet sind.

10. Baulaser nach einem der Ansprüche 4 bis 9, **dadurch gekennzeichnet, dass** die sphärische Gleitfläche (12, 12') aus einem magnetisierbaren Metall besteht.

11. Baulaser nach einem der Ansprüche 4 bis 10, **dadurch gekennzeichnet, dass** an der sphärischen Gleitfläche (12, 12') mehrere Endanschläge (15) angeordnet sind, welche die möglichen Bewegungen bereichsweise begrenzen.

12. Baulaser nach einem der Ansprüche 4 bis 11, **dadurch gekennzeichnet, dass** alle Piezoaktoren (7a, 7b, 7c) je über ein Druckfedermittel (13) gelagert sind sowie die sphärische Gleitfläche (12) kardanisch am Gehäuse (2) aufgehängt ist.

13. Baulaser nach einem der Ansprüche 1 bis 3, **dadurch gekennzeichnet, dass** das kardanisch am Gehäuse (2) gelagerte Neigungsteil (6) über zumindest zwei winkelig versetzte Hebelmechanismen (17a, 17b) mit einem Hebelverhältnis grösser 10 : 1 mit zumindest je einem Piezoaktor (7a, 7c) neigbar verbunden ist.

14. Baulaser nach Anspruch 13, **dadurch gekennzeichnet, dass** die zwei Hebelmechanismen (17a, 17b) zueinander senkrecht angeordnet sind.

15. Baulaser nach Anspruch 13 oder 14, **dadurch gekennzeichnet, dass** zwei parallel zueinander angeordnete Piezoaktoren (7a+7b) ein Kippaktorpaar ausbilden.

16. Baulaser nach einem der Ansprüche 1 bis 3, **dadurch gekennzeichnet, dass** das Neigungsteil (6) als Hexapode (18) ausgebildet ist, das über zumindest sechs Piezoaktoren (7a, 7b, 7c, 7d, 7e, 7f) direkt am Gehäuse (2) aufgehängt ist.

## Claims

1. Construction laser comprising a laser unit (3) the laser beam (4) of which is deflected by a deflecting means (5) arranged together with the laser unit (3) in a tilt part (6) adjustable relative to a housing (2) by means of an adjustment drive, the adjustment drive having at least one actuator connected in a controllable manner to an electronic control unit (8), **characterised in that** the deflecting means (5) is mounted to rotate about an axis of rotation (A) in the tilt part (6) and that the actuator is a piezo actuator (7a).

2. Construction laser according to claim 1, **characterised in that** the housing (2) is sealed relative to the tilt part (6) by means of a flexible elastic membrane (9) optionally formed of folds.

3. Construction laser according to claim 1 or claim 2, **characterised in that** at least one tilt sensor (10) sensitive to the gravitational field (G) is arranged on the tilt part (6) and is connected in a detectable manner to the electronic control unit (8).

4. Construction laser according to one of claims 1 to 3, **characterised in that** the tilt part (6) has a spherical sliding surface (12) which is mounted directly on the at least three piezo actuators (7a, 7b, 7c) distributed over the surface of the housing (2) in frictional contact therewith and is compressively pretensioned relative thereto by means of a pretensioning means.

5. Construction laser according to one of claims 1 to 3, **characterised in that** the housing (2) has an inverse spherical sliding surface (12') on which at least three piezo actuators (7a, 7b, 7c) distributed over the surface of the tilt part (6) are mounted in frictional contact therewith and which is compressively pretensioned relative thereto by means of a pretensioning means.

6. Construction laser according to claim 4 or claim 5, **characterised by** precisely four piezo actuators (7a, 7b, 7c, 7d) forming two pairs of piezo actuators (7a+7b, 7c+7d) distributed along drive directions extending perpendicularly to one another.

7. Construction laser according to one of claims 4 to 6, **characterised in that** at least one piezo actuator (7d) is mounted in the housing (2) by means of a compression spring means (13) and is compressively pretensioned relative to the centre of the sphere thereby.

8. Construction laser according to one of claims 4 to 7, **characterised in that** the deflecting means (5) is positioned in such a manner that the laser beam (4) emerges close to the centre of the spherical sliding surface (12, 12').

9. Construction laser according to one of claims 4 to 8, **characterised in that** the pretensioning means consists of at least one permanent magnet (14) and its magnetisable counterpart arranged in the housing (2) and in the tilt part (6) respectively.

10. Construction laser according to one of claims 4 to 9, **characterised in that** the spherical sliding surface (12, 12') consists of a magnetisable metal.

11. Construction laser according to one of claims 4 to 10, **characterised in that** several end stops (15) delimiting the possible movements in some areas are arranged on the spherical sliding surface (12, 12').

12. Construction laser according to one of claims 4 to 11, **characterised in that** each of the piezo actuators (7a, 7b, 7c) is mounted by means of a compression spring means (13) and the spherical sliding surface (12) is suspended from the housing (2) by universal joints.

13. Construction laser according to one of claims 1 to 3, **characterised in that** the tilt part (6) mounted on the housing (2) by universal joints is connected in a tiltable manner to at least one piezo actuator (7a, 7c) by means of at least two lever mechanisms (17a, 17b) angularly offset from one another and having a lever ratio of more than 10:1.

14. Construction laser according to claim 3, **characterised in that** the two lever mechanisms (17a, 17b) are arranged perpendicularly to one another.

15. Construction laser according to claim 13 or claim 14, **characterised in that** two piezo actuators (7a+7b) arranged in parallel to one another form a pair of tilting actuators.

16. Construction laser according to one of claims 1 to 3, **characterised in that** the tilt part (6) is designed as a hexapod (18) suspended directly from the housing (2) by means of at least six piezo actuators (7a, 7b, 7c, 7d, 7e, 7f).

## Revendications

1. Laser de construction comportant une unité laser (3) dont le faisceau laser (4) est dévié par des moyens de déviation (5), lesquels moyens de déviation sont agencés associés à l'unité laser (3) dans une partie d'inclinaison (6) qui peut être réglée par rapport à un boîtier (2) par des moyens d'actionnement, dans lequel les moyens d'actionnement comportent au moins un actionneur qui est relié à une électronique de commande (8) de manière à pouvoir être commandé, **caractérisé en ce que** les moyens de déviation (5) sont supportés dans la partie d'inclinaison (6) de manière à pouvoir tourner autour d'un axe de rotation (A), et **en ce que** l'actionneur est un actionneur piézoélectrique (7a).

2. Laser de construction selon la revendication 1, **caractérisé en ce que** le boîtier (2) est rendu étanche par rapport à la partie d'inclinaison (6) par l'intermédiaire d'une membrane élastique souple (9), facultativement formée de plis.

3. Laser de construction selon la revendication 1 ou 2, **caractérisé en ce qu'**au moins un capteur d'inclinaison (10) sensible par rapport au champ de gravitation (G) est agencé sur la partie d'inclinaison (6), lequel capteur d'inclinaison est relié à l'électronique de commande (8) de manière détectable.

4. Laser de construction selon l'une quelconque des revendications 1 à 3, **caractérisé en ce que** la partie d'inclinaison (6) comporte une surface de glissement sphérique (12) qui est montée sur les au moins trois actionneurs piézoélectriques (7a, 7b, 7c) agencés répartis de manière plane dans le boîtier (2) et directement en contact avec frottement avec ceux-ci, et est précontrainte contre ceux-ci par des moyens de précontrainte.

5. Laser de construction selon l'une quelconque des revendications 1 à 3, **caractérisé en ce que** le boîtier (2) comporte une surface de glissement sphérique inverse (12') sur laquelle sont montés au moins trois actionneurs piézoélectriques (7a, 7b, 7c) agencés répartis de manière plane dans la partie d'inclinaison (6) et directement en contact avec frottement avec ceux-ci, et est précontrainte contre ceux-ci par des moyens de précontainte.

6. Laser de construction selon la revendication 4 ou 5, **caractérisé en ce qu'**exactement quatre actionneurs piézoélectriques (7a, 7b, 7c, 7d) sont présents, lesquels actionneurs sont respectivement répartis en deux paires d'actionneurs piézoélectriques (7a + 7b, 7c + 7d) le long de directions d'actionnement perpendiculaires l'une à l'autre.

7. Laser de construction selon l'une quelconque des revendications 4 à 6, **caractérisé en ce qu'**au moins un actionneur piézoélectrique (7d) est monté dans le boîtier (2) par des moyens de ressort de compression (13) et est précontraint par ceux-ci jusqu'à un centre sphérique.

8. Laser de construction selon l'une quelconque des revendications 4 à 7, **caractérisé en ce que** les moyens de déviation (5) sont positionnés de telle sorte que la sortie du faisceau laser (4) se situe à proximité du centre sphérique de la surface de glissement sphérique (12, 12').

9. Laser de construction selon l'une quelconque des revendications 4 à 8, **caractérisé en ce que** les moyens de précontrainte sont constitués d'au moins un aimant permanent (14) et de sa pièce complémentaire pouvant être aimantée, lesquels aimant et pièce complémentaire sont respectivement agencés de manière répartie dans le boîtier (2) ou dans la partie d'inclinaison (6).

10. Laser de construction selon l'une quelconque des revendications 4 à 9, **caractérisé en ce que** la surface de glissement sphérique (12, 12') est constituée d'un métal pouvant être aimanté.

11. Laser de construction selon l'une quelconque des revendications 4 à 10, **caractérisé en ce que** plusieurs butées d'extrémité (15) sont agencées sur la surface de glissement sphérique (12, 12'), lesquelles butées limitent les mouvements possibles dans certaines zones.

12. Laser de construction selon l'une quelconque des revendications 4 à 11, **caractérisé en ce que** chacun des actionneurs piézoélectriques (7a, 7b, 7c) est supporté par des moyens de ressort de compression (13) et la surface de glissement sphérique (12) est suspendue à la cardan sur le boîtier (2).

13. Laser de construction selon l'une quelconque des revendications 1 à 3, **caractérisé en ce que** la partie d'inclinaison (6) montée à la cardan sur le boîtier (2) est respectivement reliée de manière inclinable à au moins un actionneur piézoélectrique (7a, 7c) par au moins deux mécanismes à levier (17a, 17b) angulairement décalés avec un rapport de levier supérieur à 10:1.

14. Laser de construction selon la revendication 3, **caractérisé en ce que** les deux mécanismes à levier (17a, 17b) sont agencés perpendiculairement l'un à l'autre.

15. Laser de construction selon la revendication 13 ou 14, **caractérisé en ce que** deux actionneurs piézoélectriques (7a + 7b) agencés parallèlement l'un à l'autre forment une paire d'actionneurs de basculement.

16. Laser de construction selon l'une quelconque des revendications 1 à 3, **caractérisé en ce que** la partie d'inclinaison (6) est configurée comme un hexapode (18) qui est directement suspendu sur le boîtier (2) par au moins six actionneurs piézoélectriques (7a, 7b, 7c, 7d, 7e, 7f).
